# FASCICULE DE BREVET EUROPEEN

(11) **EP 4 563 845 B1**
(45) Date de publication et mention de la délivrance du brevet: **27.05.2026**
(21) Numéro de dépôt: 24212806.4
(22) Date de dépôt: 13.11.2024
(51) Int. Cl.: F16H 25/20, H02K 7/116

(54) **ACTIONNEUR ÉLECTROMÉCANIQUE**
ELEKTROMECHANISCHER AKTUATOR
ELECTROMECHANICAL ACTUATOR

(30) Priorité: 01.12.2023 FR 2313435
(43) Date de publication de la demande: 04.06.2025
(73) Titulaire: VALEO EMBRAYAGES, 80009 Amiens (FR)
(72) Inventeur: GAUTIER, Sylvain, 95892 CERGY PONTOISE (FR); BASKARAN, Sachidhanandam, 600130 Chennai, Tamil Nadu (IN); RIDOLFI, Gabriel, 95892 CERGY PONTOISE (FR)
(74) Mandataire: Valeo Powertrain Systems

(56) Documents cités:
- ES-U- 1 217 209
- US-A1- 2013 112 022
- US-B2- 10 935 114

## Description

L'invention concerne un actionneur électromécanique.

L'invention s'applique plus précisément au domaine des actionneurs pour un système de verrouillage en stationnement d'une boîte de vitesses de véhicule, notamment un véhicule automobile équipé d'une boîte de vitesses automatique, par exemple un véhicule hybride. L'invention s'applique également à un système de verrouillage en stationnement d'un réducteur associé à un moteur de véhicule électrique. La boîte de vitesses ou le réducteur seront plus généralement appelés boîte de transmission. Ce système de verrouillage est mieux connu par son terme en anglais *« park-lock »* ou *« parking lock ».* Un tel actionneur permet le blocage en stationnement de la boîte de transmission au moyen d'un levier venant en prise avec une denture de la boîte de transmission.

L'invention s'applique également au domaine des actionneurs pour un système de connexion/déconnexion d'éléments dans la transmission des véhicules précités.

Des actionneurs de ce type sont connus, par exemple dans le document ES1217209UA. Ce type d'actionneur à l'inconvénient de proposer un mécanisme complexe pour la détection de la position de l'arbre principal avec un système de roue et vis sans fin.

Il est également connu la demande de brevet FR3143079A1 au nom de la demanderesse. L'architecture de cet actionneur présente l'inconvénient d'être compliqué à assembler, notamment l'assemblage du premier système roto-linéaire portant l'aimant. En effet, il est nécessaire de visser le support d'aimant à l'intérieur de l'actionneur à partir de l'élément de sortie de couple ce qui engendre des manipulations complexes. De plus, le vissage doit également être effectué jusqu'à une position spécifique, ce qui nécessite de compter le nombre de rotations.

Il est ainsi nécessaire de proposer un système plus simple à assembler tout en étant efficace.

Ainsi l'invention propose un actionneur électromécanique tel que décrit dans la revendication 1 comprenant un boîtier et un moteur électrique logé dans le boîtier, le moteur électrique agissant sur un élément de sortie de couple apte à être couplé avec un élément d'une boîte de transmission d'un véhicule automobile, l'élément de sortie de couple étant relié au moteur électrique par des moyens d'entraînement, l'élément de sortie de couple étant un arbre principal configuré pour tourner autour de son axe de rotation avec une première extrémité et une seconde extrémité, l'actionneur comprend en outre une carte électronique située dans le boîtier, la carte électronique comprend un capteur qui fait face à un aimant monté sur un support caractérisé en ce que le support d'aimant est couplé à la seconde extrémité de l'arbre principal au moyen d'un premier mécanisme roto-linéaire, ledit support d'aimant étant bloqué en rotation par rapport au boîtier par l'intermédiaire d'une plaque rapportée et fixée au boîtier.

Cette conception permet lors de l'assemblage de l'actionneur de réaliser un sous-ensemble comprenant l'élément de sortie de couple, c'est-à-dire l'arbre principal sur lequel est monté le support d'aimant. Ce sous-ensemble est intégré dans le boîtier et la plaque vient ensuite bloquer la rotation du support d'aimant par rapport au boîtier ce qui génère ainsi la translation du premier système roto-linéaire le long de l'arbre principal.

Avantageusement, le premier mécanisme roto-linéaire est un système vis écrou. La partie vis se trouve sur l'arbre principal, plus précisément à une de ses extrémités. La partie écrou peut être directement le support d'aimant ou indirectement liée au support d'aimant. Tout autre type de mécanisme roto-linéaire peut être utilisé en variante, par exemple un système vis à billes.

Avantageusement, la plaque est fixée sur le boîtier par l'intermédiaire d'au moins un pion de centrage issu de matière avec le boîtier. Le boîtier est par exemple en plastique. De préférence, deux pions sont issus de matière avec le boîtier.

Selon un mode de réalisation préféré de l'invention, le pion de centrage est apte à être déformé par une opération de déformation à chaud ou de soudure un fois la plaque insérée.

Selon un mode de réalisation préféré de l'invention, la plaque est en métal. Le métal a l'avantage de reprendre les efforts générés par le support d'aimant sans se déformer.

Selon un mode de réalisation préféré de l'invention, le support d'aimant comprend au moins une protubérance en contact avec la plaque. De préférence, deux protubérances s'étendent radialement de part et d'autre du support d'aimant. Le support d'aimant est de préférence en plastique pour réaliser un contact plastique métal avec la plaque. Un contact plastique métal permet un glissement et une durée de vie optimisé.

De manière avantageuse, en configuration assemblée la plaque se trouve au-dessus du support d'aimant. Cet agencement permet de faciliter l'assemblage de l'actionneur.

Selon une caractéristique additionnelle de l'invention, le boîtier comprend une ouverture axiale et le support d'aimant est apte, de par sa taille, à passer au travers de cette ouverture. Cet agencement permet de faciliter l'assemblage de l'actionneur.

Selon une autre caractéristique de l'invention, l'arbre principal est relié au moteur électrique au moyen d'un système pignon roue pour effectuer la rotation de l'arbre principal. Le pignon se trouve sur l'arbre du moteur électrique et la roue se trouve sur l'élément de sortie de couple, c'est à dire l'arbre principal. De préférence, le système pignon roue est à denture droite.

De manière avantageuse, un second mécanisme roto-linéaire est couplé à la première extrémité de l'arbre principal. Le second mécanisme roto-linéaire permet de transformer le mouvement rotatif de l'arbre principal en mouvement linéaire. Le second mécanisme roto-linéaire est un système vis écrou, la partie vis se trouve sur l'arbre principal, plus précisément à l'une de ses extrémités, et la partie écrou est un organe de poussée. Tout autre type de mécanisme roto-linéaire peut être utilisé en variante, par exemple un système vis à billes

Selon une particularité de l'invention, la course du premier mécanisme roto-linéaire est différente de la course du second mécanisme roto-linéaire. Par exemple, la course du premier mécanisme roto-linéaire et la course du second mécanisme roto-linéaire ont un ratio compris entre 0,1 et 3.

Selon un mode de réalisation préféré de l'invention, l'arbre principal est guidé en rotation par un roulement, la bague intérieure du roulement est contact avec l'arbre principal et la bague extérieure du roulement est en contact avec une bride fixée au boîtier.

D'autres caractéristiques et avantages de l'invention ressortiront à la lecture qui suit d'un exemple de réalisation détaillé, en référence aux figures annexées :
la [Figure 1] représente une vue en coupe d'un actionneur selon l'invention ;
la [Figure 2] représente une vue en perspective de l'actionneur selon l'invention ;
la [Figure 3] représente une autre vue en coupe de l'actionneur selon l'invention ;
la [Figure 4] représente une vue en perspective de la bride de l'actionneur ;
la [Figure 5] représente une vue en coupe focalisée sur la bride de l'actionneur.

Il est à noter que les figures divulguent l'invention d'une manière suffisamment détaillée pour sa mise en œuvre, lesdites figures aidant à mieux définir l'invention au besoin. L'invention ne devrait cependant pas être limitée au mode de réalisation divulgué dans la description.

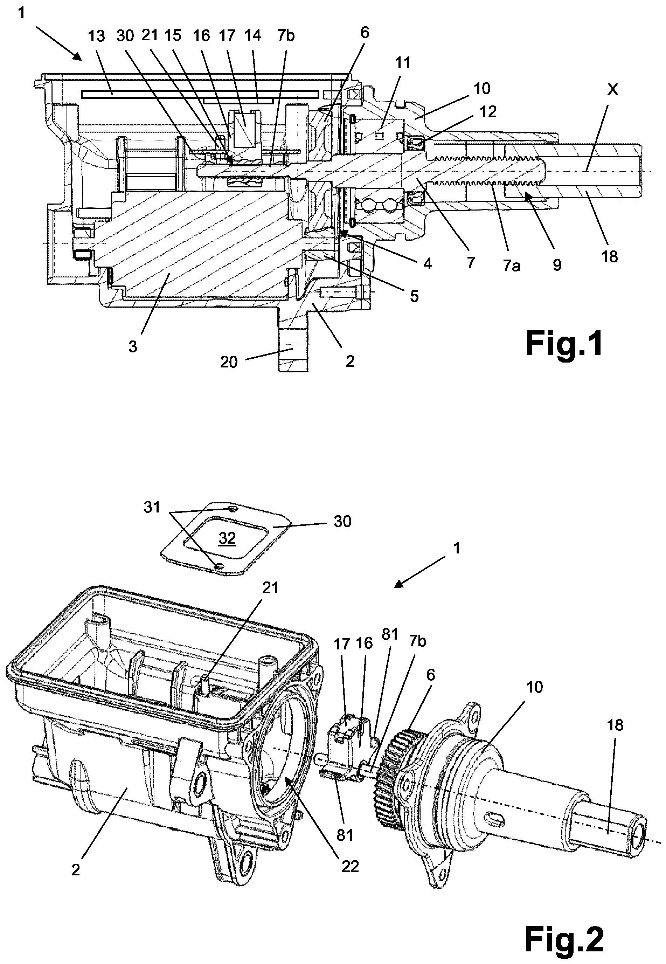

Sur la [Figure 1] est illustré un actionneur électromécanique 1 comprenant un moteur électrique à courant continu 3 logé à l'intérieur d'un boîtier 2 en plastique. Le boîtier 2 peut être fixé à la boîte de transmission par l'intermédiaire d'œillets 20 de fixation. En partie supérieure, le boîtier 2 est apte à être fermé au moyen d'un capot (non représenté).

Le moteur électrique 3 agit sur un organe de poussée 18 configuré pour effectuer un déplacement linéaire prédéterminé (un mouvement d'extension et de rétraction) pour entrer en contact avec un mécanisme externe (non représenté) dans la boîte de transmission.

L'organe de poussée 18 est relié au moteur électrique 3 par l'intermédiaire d'un arbre principal 7 aligné axialement avec l'organe de poussée 18. L'arbre principal 7 est de préférence en métal et est configuré pour tourner autour de son axe de rotation X. Un première extrémité 7a de l'arbre principal 7, c'est-à-dire celle faisant face à l'élément de la boîte de transmission, est couplée à l'organe de poussée 18 par un mécanisme roto-linéaire 9, de sorte que l'organe de poussée 18 peut se déplacer en translation par rapport à l'arbre principal 7 lorsque l'arbre principal 7 est en rotation. Le mécanisme roto-linéaire 9 est un système vis écrou. La première extrémité 7a de l'arbre principal 7 présente une section filetée externe qui est couplée à une section filetée présente dans un logement interne de l'organe de poussée 18.

L'arbre principal 7 est relié au moteur électrique 3 par des moyens d'entraînement 4, c'est-à-dire un système pignon-roue pour effectuer la rotation de l'arbre principal 7. La roue dentée 6 du système pignon-roue est couplée de manière fixe à l'arbre principal 7 qui s'engage avec un pignon 5 monté sur un arbre du moteur électrique 3.

Le moteur électrique 3 est piloté au moyen d'une carte électronique 13 située dans le boîtier 2.

Pour assurer un fonctionnement de l'actionneur 1, il est prévu des moyens de détection configurés pour détecter la position axiale de l'organe de poussée 18, comprenant un capteur à effet Hall 14 monté de façon permanente et connecté à la carte électronique 13 et un aimant permanent 17. Cet aimant 17 est monté sur un support 16 qui est couplé à l'arbre principal 7 au moyen d'un mécanisme roto-linéaire 15, de sorte que le support d'aimant peut se déplacer en translation par rapport à l'arbre principal 7 lorsque l'arbre principal 7 est en rotation. Le mécanisme roto-linéaire 15 est un système vis écrou.

En ce qui concerne plus particulièrement le support d'aimant 16, il comprend un corps en matière plastique doté d'une zone supérieure recevant l'aimant 17 et une zone inferieure sous la forme d'un écrou fileté configuré pour s'engager avec une section filetée de la seconde extrémité 7b de l'arbre principal 7. L'écrou fileté est un insert métallique 19 surmoulé avec le support d'aimant 16.

La course des deux mécanismes roto-linéaire 9, 15 est différente. En particulier, la course du premier mécanisme roto-linéaire 15, c'est-à-dire celui associé au système de détection capteur 14 et aimant 17 est plus petite que la course du second mécanisme roto-linéaire 9 de l'organe de poussée 18. Par exemple, la course du premier mécanisme roto-linéaire 15 est de 14mm et la course du second mécanisme roto-linéaire 9 est de 22mm. De cette manière, la course du premier mécanisme roto-linéaire et la course du second mécanisme roto-linéaire ont un ratio compris entre 0,5 et 0,8. De préférence le ratio est de 0,7.

Ainsi, en fonction du champ magnétique généré par l'aimant permanent 17 qui est détecté par le capteur 14, le système aura connaissance de la position exacte de l'organe de poussée 18.

L'arbre principal 7 est supporté et guidé en rotation par un roulement à double rangée de billes 11. La bague intérieure du roulement 11 est contact avec l'arbre principal 7 et la bague extérieure du roulement 11 est en contact avec le boîtier 2 et une bride 10 rapportée et fixée au boîtier 2. La bride 10 sert également de guidage au second mécanisme roto-linéaire 9. Un joint à lèvre 12 est logé dans la bride 10 et se trouve axialement entre le roulement 11 et l'organe de poussée 18 afin d'empêcher que des polluants externes n'entrent dans l'actionneur 1.

La [Figure 2] permet de mieux visualiser les différents composants de l'actionneur et notamment la plaque 30 qui vient se fixer dans le boîtier 2.

Lors de l'assemblage de l'actionneur, un sous ensemble est créé et comprend l'arbre principal 7, le support d'aimant 16 et son aimant 17, la roue dentée 6, le roulement 12 ainsi que la bride 10 et l'organe de poussé 18. Ce sous ensemble est ensuite inséré dans le boîtier 2 par l'ouverture axiale 22 concentrique à l'axe de rotation X. De par son encombrement réduit, c'est-à-dire en largeur et en hauteur, le support d'aimant 16 est apte à passer au travers de cette ouverture 22. Une fois que le support d'aimant se trouve à l'intérieure du boîtier 2, une plaque 30 est rapportée et vient se positionner sur les pions 21 qui émergent du boîtier grâce à des ouvertures 31 dans la plaque 30.

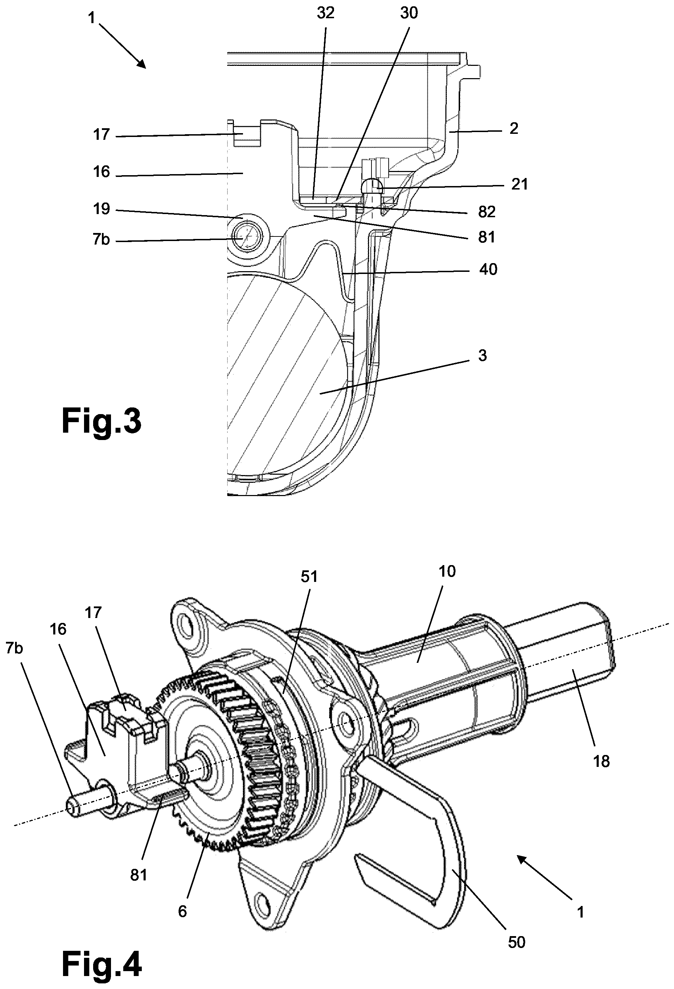

Une fois que la plaque 20 est positionnée dans le boîtier le long des pions 21, ceux-ci sont déformés par une opération de déformation à chaud afin de créer un bourrelet de matière qui vient bloquer la plaque 30 en position. Ce blocage de la plaque 30 est visible à la [Figure 3]. Il est également visible sur cette figure que le moteur électrique 3 est maintenu dans le boîtier par une plaque de compression 40.

Le support d'aimant 16, notamment la zone supérieure recevant l'aimant 17 passe au travers de la plaque 30 via une ouverture 32. La zone inferieure du support d'aimant 16 est configuré pour s'engager avec une section filetée de la seconde extrémité 7b de l'arbre principal 7 via l'insert métallique 19 afin de réaliser la fonction écrou. Le support d'aimant 16, notamment sa partie inférieure, comprend deux protubérance 81 sous forme d'ailes qui viennent en contact avec la plaque 30 afin de réaliser la fonction anti-rotation. Les deux protubérances 81 s'étendent radialement de part et d'autre du support d'aimant 16. Le contact se fait par un picot linéaire 82 qui se trouve sur chaque protubérance 81 afin de minimiser la surface de contact entre le support d'aimant 16 et la plaque 30. La plaque 30 est métallique et le support d'aimant 16 est en plastique pour réaliser un contact plastique métal.

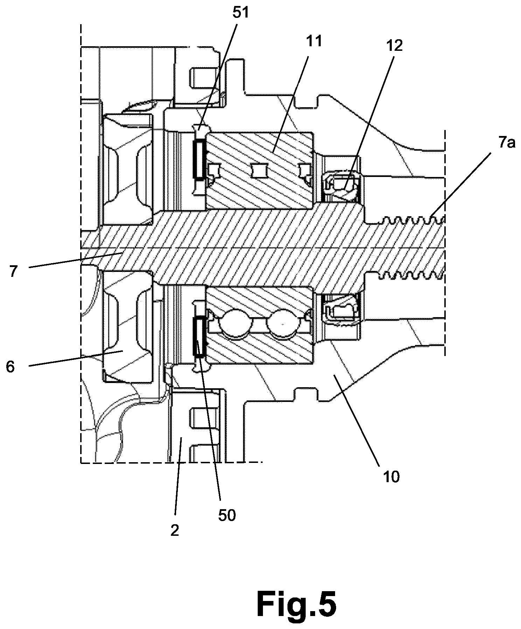

Les [Figure 4] et [Figure 5] montrent plus en détail la conception de la bride 10. Pour des raisons d'optimisation du poids et du coût de l'actionneur, la bride est réalisée en plastique. Le procédé d'obtention de cette bride en plastique ne permet pas de créer une gorge pour y insérer un anneau élastique nécessaire au blocage axial du roulement 11 dans la bride 10. Une épingle 50 est alors radialement insérée dans une ouverture 51 de la bride. L'épingle 50 est sensiblement en forme de « U ». Une fois l'épingle 50 montée dans la bride 10, le roulement 11 est bloqué axialement. Une fois la bride 10 assemblée sur le boîtier 2, l'épingle 50 est bloquée radialement par le boîtier 2, c'est-à-dire qu'elle ne peut plus sortir de son logement 51, ce qui assure un blocage optimisé du roulement 11.

Bien que l'invention ait été décrite en liaison avec un mode de réalisation particulier, il est bien évident qu'elle n'y est nullement limitée et qu'elle comprend tous les équivalents techniques des moyens décrits.

Dans les revendications, les symboles de référence entre parenthèses ne doivent pas être interprétés comme une limitation de la revendication.

## Revendications

1. Actionneur électromécanique (1) comprenant un boîtier (2) et un moteur électrique (3) logé dans le boîtier (2), le moteur électrique (3) agissant sur un élément de sortie de couple apte à être couplé avec un élément d'une boîte de transmission d'un véhicule automobile, l'élément de sortie de couple étant relié au moteur électrique (3) par des moyens d'entraînement (4), l'élément de sortie de couple étant un arbre principal (7) configuré pour tourner autour de son axe de rotation (X) avec une première extrémité (7a) et une seconde extrémité (7b), l'actionneur (1) comprend en outre une carte électronique (13) située dans le boîtier (2), la carte électronique (13) comprend un capteur (14) qui fait face à un aimant (17) monté sur un support (16), **caractérisé en ce que** le support d'aimant (16) est couplé à la seconde extrémité (7b) de l'arbre principal (7) au moyen d'un premier mécanisme roto-linéaire (15), ledit support d'aimant (16) étant bloqué en rotation par rapport au boîtier (2) par l'intermédiaire d'une plaque (30) rapportée et fixée au boîtier (2).

2. Actionneur électromécanique (1) selon la revendication 1, **caractérisé en ce que** le premier mécanisme roto-linéaire (15) est un système vis écrou.

3. Actionneur électromécanique (1) selon la revendication 1 ou 2, **caractérisé en ce que** la plaque (30) est fixée sur le boîtier (2) par l'intermédiaire d'au moins un pion (21) de centrage issu de matière avec le boîtier (2).

4. Actionneur électromécanique (1) selon la revendication 2, **caractérisé en ce que** le pion (21) de centrage est apte à être déformé par une opération de déformation à chaud ou de soudure un fois la plaque (30) insérée.

5. Actionneur électromécanique (1) selon l'une des revendications précédentes, **caractérisé en ce que** le support d'aimant (16) comprend au moins une protubérance (81) en contact avec la plaque (30).

6. Actionneur électromécanique (1) selon l'une des revendications précédentes, **caractérisé en ce que** le boîtier (2) comprend une ouverture axiale (22) et le support d'aimant (16) est apte, de par sa taille, à passer au travers de cette ouverture (22).

7. Actionneur électromécanique (1) selon l'une des revendications précédentes, **caractérisé en ce que** l'arbre principal (7) est relié au moteur électrique (1) au moyen d'un système pignon (5) roue (6) pour effectuer la rotation de l'arbre principal (7).

8. Actionneur électromécanique (1) selon l'une des revendications précédentes, **caractérisé en ce qu'**un second mécanisme roto-linéaire (9) est couplé à la première extrémité (7a) de l'arbre principal (7).

9. Actionneur électromécanique (1) selon la revendication 8, **caractérisé en ce que** la course du premier mécanisme roto-linéaire (15) est différente de la course du second mécanisme roto-linéaire (9).

10. Actionneur électromécanique (1) selon l'une des revendications précédentes, **caractérisé en ce que** l'arbre principal (7) est guidé en rotation par un roulement (11), la bague intérieure du roulement (11) est contact avec l'arbre principal (7) et la bague extérieure du roulement (11) est en contact avec une bride (10) fixée au boîtier (2).

## Patentansprüche

1. Elektromechanischer Aktuator (1) mit einem Gehäuse (2) und einem in dem Gehäuse (2) untergebrachten Elektromotor (3), wobei der Elektromotor (3) auf ein Drehmomentabtriebselement wirkt, das mit einem Element eines Getriebes eines Kraftfahrzeugs gekoppelt werden kann, wobei das Drehmomentabtriebselement über Antriebsmittel (4) mit dem Elektromotor (3) verbunden ist, wobei das Drehmomentabgabeelement eine Hauptwelle (7) ist, die so ausgebildet ist, dass sie sich um ihre Drehachse (X) dreht, und ein erstes Ende (7a) sowie ein zweites Ende (7b) aufweist, wobei der Aktuator (1) ferner eine im Gehäuse (2) angeordnete Elektronikplatine (13) umfasst, die elektronische Platine (13) einen Sensor (14) umfasst, der einem auf einem Träger (16) montierten Magneten (17) gegenüberliegt, **dadurch gekennzeichnet, dass** der Magnetträger (16) mittels eines ersten rotations-linearen Mechanismus (15) mit dem zweiten Ende (7b) der Hauptwelle (7) gekoppelt ist, wobei der Magnethalter (16) gegenüber dem Gehäuse (2) mittels einer am Gehäuse (2) angebrachten und befestigten Platte (30) drehfest gehalten wird.

2. Elektromechanischer Aktuator (1) nach Anspruch 1, **dadurch gekennzeichnet, dass** der erste Rotations-Linear-Mechanismus (15) ein Schrauben-Mutter-System ist.

3. Elektromechanischer Aktuator (1) nach Anspruch 1 oder 2, **dadurch gekennzeichnet, dass** die Platte (30) über mindestens einen aus dem Gehäuse (2) einstückig geformten Zentrierzapfen (21) am Gehäuse (2) befestigt ist.

4. Elektromechanischer Aktuator (1) nach Anspruch 2, **dadurch gekennzeichnet, dass** der Zentrierzapfen (21) nach dem Einsetzen der Platte (30) durch einen Warmverformungs- oder Schweißvorgang verformbar ist.

5. Elektromechanischer Aktuator (1) nach einem der vorstehenden Ansprüche, **dadurch gekennzeichnet, dass** der Magnetträger (16) mindestens einen Vorsprung (81) aufweist, der mit der Platte (30) in Kontakt steht.

6. Elektromechanischer Aktuator (1) nach einem der vorstehenden Ansprüche, **dadurch gekennzeichnet, dass** das Gehäuse (2) eine axiale Öffnung (22) aufweist und der Magnetträger (16) aufgrund seiner Größe durch diese Öffnung (22) hindurchgeführt werden kann.

7. Elektromechanischer Aktuator (1) nach einem der vorstehenden Ansprüche, **dadurch gekennzeichnet, dass** die Hauptwelle (7) mittels eines Zahnrad-Radsystems (5, 6) mit dem Elektromotor (3) verbunden ist, um die Drehung der Hauptwelle (7) zu bewirken.

8. Elektromechanischer Aktuator (1) nach einem der vorstehenden Ansprüche, **dadurch gekennzeichnet, dass** ein zweiter Rotations-Linear-Mechanismus (9) mit dem ersten Ende (7a) der Hauptwelle (7) gekoppelt ist.

9. Elektromechanischer Aktuator (1) nach Anspruch 8, **dadurch gekennzeichnet, dass** der Hub des ersten Rotations-Linear-Mechanismus (15) sich vom Hub des zweiten Rotations-Linear-Mechanismus (9) unterscheidet.

10. Elektromechanischer Aktuator (1) nach einem der vorstehenden Ansprüche, **dadurch gekennzeichnet, dass** die Hauptwelle (7) drehbar durch ein Lager (11) geführt ist, der Innenring des Lagers (11) in Kontakt mit der Hauptwelle (7) steht und der Außenring des Lagers (11) in Kontakt mit einem am Gehäuse (2) befestigten Flansch (10) steht.

## Claims

1. Electromechanical actuator (1) comprising a housing (2) and an electric motor (3) housed within the housing (2), the electric motor (3) acting on a torque output element capable of being coupled to an element of a motor vehicle transmission, the torque output element being connected to the electric motor (3) by drive means (4), the torque output element being a main shaft (7) configured to rotate about its axis of rotation (X) with a first end (7a) and a second end (7b), the actuator (1) further comprises an electronic board (13) located within the housing (2), the electronic board (13) includes a sensor (14) that faces a magnet (17) mounted on a support (16), **characterized in that** the magnet support (16) is coupled to the second end (7b) of the main shaft (7) by means of a first rotary-linear mechanism (15), said magnet support (16) being locked against rotation relative to the housing (2) by means of a plate (30) attached to and secured to the housing (2).

2. Electromechanical actuator (1) according to claim 1, **characterized in that** the first rotary-linear mechanism (15) is a screw-nut system.

3. Electromechanical actuator (1) according to claim 1 or 2, **characterized in that** the plate (30) is secured to the housing (2) by means of at least one centering pin (21) formed integrally with the housing (2).

4. Electromechanical actuator (1) according to claim 2, **characterized in that** the centering pin (21) is capable of being deformed by a hot forming or welding operation once the plate (30) is inserted.

5. Electromechanical actuator (1) according to one of the preceding claims, **characterized in that** the magnet support (16) comprises at least one protrusion (81) in contact with the plate (30).

6. **Electromechanical** actuator (1) according to one of the preceding claims, **characterized in that** the housing (2) comprises an axial opening (22) and the magnet support (16) is sized to pass through said opening (22).

7. Electromechanical actuator (1) according to one of the preceding claims, **characterized in that** the main shaft (7) is connected to the electric motor (3) by means of a pinion (5)-gear (6) system to effect the rotation of the main shaft (7).

8. Electromechanical actuator (1) according to one of the preceding claims, **characterized in that** a second rotary-linear mechanism (9) is coupled to the first end (7a) of the main shaft (7).

9. Electromechanical actuator (1) according to claim 8, **characterized in that** the stroke of the first rotary-linear mechanism (15) is different from the stroke of the second rotary-linear mechanism (9).

10. Electromechanical actuator (1) according to one of the preceding claims, **characterized in that** the main shaft (7) is rotatably guided by a bearing (11), the inner ring of the bearing (11) is in contact with the main shaft (7) and the outer ring of the bearing (11) is in contact with a flange (10) secured to the housing (2).
